# EUROPEAN PATENT SPECIFICATION

(11) **EP 1 927 431 B1**
(45) Date of publication and mention of the grant of the patent: **29.09.2010**
(21) Application number: 06781798.1
(22) Date of filing: 27.07.2006
(51) Int. Cl.: B23Q 11/14, F25B 49/02

(54) **TEMPERATURE CONTROL METHOD AND DEVICE OF MACHINE TOOL**
TEMPERATURREGELVERFAHREN UND -VORRICHTUNG FÜR WERKZEUGMASCHINE
PROCÉDÉ ET DISPOSITIF DE RÉGULATION DE LA TEMPÉRATURE POUR MACHINE-OUTIL

(30) Priority: 02.08.2005 JP 2005223860
(43) Date of publication of application: 04.06.2008
(73) Proprietor: Kanto Seiki Co. Ltd., Maebashi-shi Gumma 371-0854 (JP)
(72) Inventor: EBISAWA, Kyoichi, c/o KANTO SEIKI CO., LTD., Maebashi-shi, Gunma 371085 4 (JP); HAGIWARA, Masahiko, c/o KANTO SEIKI CO., LTD., Maebashi-shi, Gunma 3710854 (JP); URANO, Koichi, c/o KANTO SEIKI CO., LTD., Maebashi-shi, Gunma 3710854 (JP)
(74) Representative: TER MEER - STEINMEISTER & PARTNER GbR
(86) International application number: PCT/JP2006/314887
(87) International publication number: WO 2007/015421

(56) References cited:
- JP-A- 4 372 328
- JP-A- 9 113 034
- JP-A- 09 113 034
- JP-A- 60 133 273
- JP-A- 60 133 273

## Description

### TECHNICAL FIELD

The present invention relates to a temperature control method and device for machine tools for cooling a heating source of a machine tool and suppressing thermal deformation, and more particularly to a temperature control method and device which can decrease transient deviation between a setting temperature and a coolant temperature, and can decrease time until the coolant temperature stabilizes (settling time) in the temperature control of machine tools, even if the calorific value of the heating source changes.

### BACKGROUND ART

Document JP 04-372328 A, which represents the closest prior art, discloses a temperature control device for machine tools of the above kind.

The body of a machine tool could be deformed by environmental temperature and heat from a heating section. Since deformation of the body affects processing accuracy, conventionally the temperature of each section of the body has been controlled to be a predetermined temperature. Various methods have been proposed to control the temperature, but normally a cooling oil, of which temperature is controlled, is constantly supplied to a heating section of a machine tool at a predetermined flow rate, so as to cool down the heating section. This cooling oil is cooled by a coolant gas via a heat exchanger. The setting temperature of the cooling oil is a room temperature or a temperature of an element of which time constant is at the maximum among the composing elements of the machine tool, and the temperature of the cooling oil at the outlet of the heating section of the machine tool is controlled to follow up with this temperature. This method minimizes the thermal deformation of the machine tool and decreases processing errors. This method is a known technology, and these systems are called "room temperature follow up control" or "body temperature follow up control".

A two-position control (ON-OFF control) has been used as the simplest control operation for such a room temperature follow up control or body temperature follow up control. In the case of two-position control, the cooling temperature to be controlled has a temperature change width. Also in the two-position control, the oil temperature to be controlled generates a steady state deviation. In the case of recent machine tools which have high calorific values, the temperature change width and the steady state deviation may exceed the tolerance. Therefore control to eliminate the steady state deviation is sometimes performed by PID control, including integration operations.

Another proposal is smoothing the change of coolant temperature by controlling the change of rotation speed of a refrigerator, which is a compressor, by the driving frequency of an inverter. However, the rotation speed of a main spindle of a machine tool changes from stopping status to several thousand times per minute or more, and the width of the calorific value is very large, so conventional inverter frequency control alone causes control problems due to the limit in variable range of the cooling capability. Due to the restriction in a performance of a refrigerator, the variable range of cooling capacity is about 1:4 (ratio of minimum frequency and maximum frequency). Particularly because of the limit of variable range of cooling capability in the low load are (including no load), the accuracy of temperature control in the low load area deteriorates.

In order to improve the accuracy of such conventional temperature control, the present applicant has proposed a technology disclosed in the following Patent Document JP 2529905 B2. Said Document discloses a temperature control method for machine tools which decreases the transient deviation and the steady state deviation by feed forward control, wherein a bypass line, which bypasses the coolant gas immediately after coming out of the refrigerator, is created, and the variable range of cooling capability in the low load area is expanded by opening an electrostatic valve created on the bypass line.

However, even the technology of said Patent Document has the following problems. First an interface circuit to send rotation speed instruction information on a main spindle of a machine tool to a temperature control device is required, since control is performed based on feed forward control, and software for sending the rotation speed instruction information is also required, so the system of the machine tool side must be changed, system development takes time, and the cost of the entire system increases. Also it is necessary to create a control table to store the relationships between the rotation speed of the main spindle of the machine tool and the cooling capability of the refrigerator as a data base, in order to perform feed forward control, and the creation of this control table also increases the time and cost of system development.

It is possible to perform temperature control only by feedback control without performing feed forward control in order to decrease the cost of the technology of Patent Document 1, but it became clear that the response deteriorates when the calorific value of the heating section changes (when the thermal load changes) in this case. This point will be described in detail.

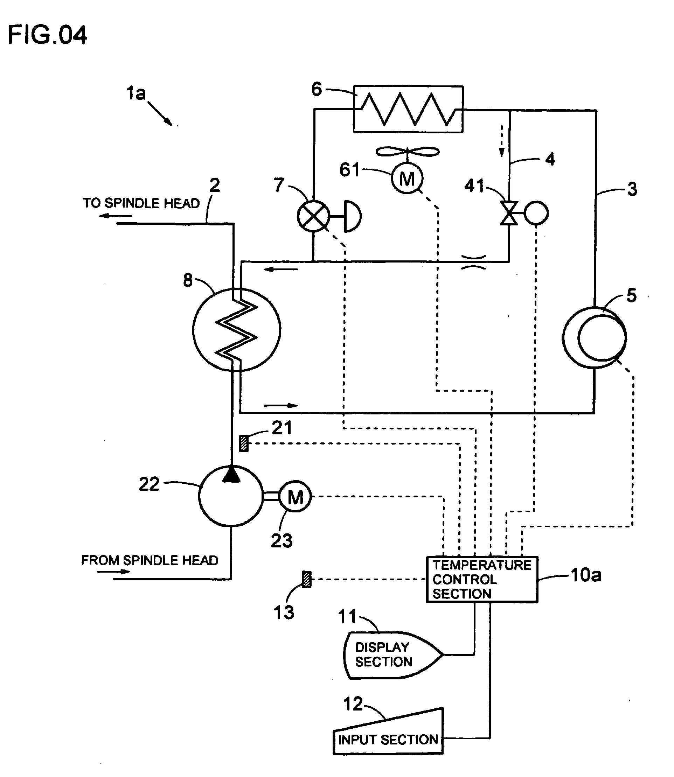

Fig. 4 is a diagram depicting a configuration of a temperature control device 1a in the case when a temperature control similar to Patent Document JP 2529905 B2 is performed only by feedback control. In this description, a spindle head is used as an example of a typical heating source of a machine tool. To the spindle head, a main spindle is rotatably supported, and a tool or work piece is mounted to the main spindle and is rotary driven. Since the rotation speed of the main spindle of the machine tool changes from the stopping state to several thousand rotations per minute, temperature control is performed by cooling the spindle head which supports the main spindle, so that the temperature of the spindle head always maintains a predetermined temperature difference with respect to a reference temperature. In other words, the control target is always maintaining the temperature of the spindle head to have a predetermined temperature difference with respect to the reference temperature.

The reference temperature is set to a room temperature or a temperature of an element (e.g. bed, column) having a large time constant (having a large thermal capacity) out of the composing elements of the machine tool. The temperature of the reference element, which is measured by a reference temperature sensor 13, is set as the reference temperature. For the reference temperature, one temperature may be selected out of the temperatures measured at a plurality of locations, or an average value of a plurality of measured values may be used. The reference temperature may also be set by performing an appropriate computation on measured values.

In Fig. 4, a cooling circuit 2 is created so as to cool the spindle head of the machine tool, and a cooling oil as a coolant circulates in the cooling circuit 2. A cooling pump 22, installed in the cooling circuit 2, is driven by a driving motor 23, and circulates the cooling oil in the cooling circuit 2 at a predetermined flow rate. After being cooled by a heat exchanger 8, the cooling oil is supplied to the spindle head, and cools the spindle head.

For the coolant which flows into the heat exchanger 8, the coolant gas is first compressed by a refrigerator 5, and is then sent to a condenser 6. In the condenser 6, the heat of the coolant gas, of which temperature was increased by compression, is radiated, and the gas is liquefied. The condenser 6 is cooled by air cooling using a cooling fan 61. The liquefied coolant gas is throttle-expanded while passing through an expansion valve 7, and becomes a low temperature low pressure gas-liquid mixed state. This low temperature low pressure gas-liquid mixed coolant gas flows into the heat exchanger 8, and cools the cooling oil. The coolant gas is evaporated in the heat exchanger 8 by receiving the heat of the cooling oil, and efficiently cools the cooling oil by the heat of vaporization. The coolant gas flowing from the heat exchanger 8 returns to the refrigerator 5, and circulates through a circulation circuit 3.

The refrigerator 5 is driven by an inverter, and the rotation speed of the refrigerator 5 can be changed by changing the driving frequency. The driving frequency of the refrigerator 5 is controlled by a temperature control section 10a. Specific details of the temperature control section 10a will be described later.

A bypass line 4, which supplies a part of the coolant gas, of which temperature was increased by compression, into the heat exchanger 8 without cooling, is attached to the circulation circuit 3 through which the coolant gas circulates. An electromagnetic switching valve 41 is disposed in the bypass line 4. The bypass line 4 is disposed for adjusting the cooling capability to cool the cooling oil, and when the electromagnetic switching valve 41 is in an open state, high temperature gas mixes with the low temperature coolant gas, and flows into the heat exchanger 8, so the cooling capability drops. When the electromagnetic switching valve 41 is in a closed state, the high temperature gas does not mix in, and the default capability of the refrigerator 5 is active.

The temperature control section 10a controls the temperature of the spindle head of the machine tool by controlling the driving frequency of the refrigerator 5, the open/closed state of the electromagnetic switching valve 41, and the opening degree of the expansion valve 7. A display section 11 and an input section 12 are connected to the temperature control section 10a. Various parameters on the temperature control can be confirmed by the display section 11, and these parameters can be input by the input section 12. For the temperature of the spindle head, the temperature of the cooling oil, which cooled the spindle head and returned, is detected by the temperature sensor 21, and this detected value is regarded as the typical temperature value of the spindle head. In the expansion valve 7, the opening degree of the valve is adjusted by moving the valve element by stepping motor driving. Therefore the opening degree of the expansion valve 7 can be adjusted by a digital opening degree instruction.

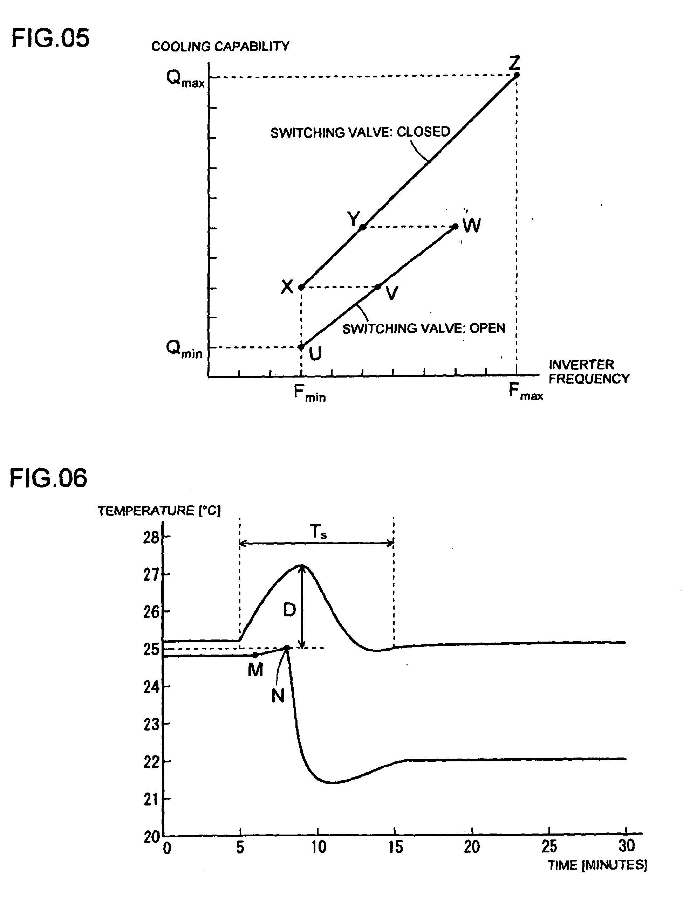

Fig. 5 is a graph depicting a control state of the temperature control section 10a. The abscissa of the graph in Fig. 5 indicates the inverter frequency for driving the refrigerator 5, and the ordinate indicates the cooling capability of the temperature control device 1a. Since the rotation speed of the main spindle of the machine tool changes in a wide range, the change of the calorific value is also great, hence the temperature control section 10a must perform smooth control throughout a wide range from a low cooling capability range to a high cooling capability range. However, as mentioned above, the driving frequency of the refrigerator 5, based on inverter driving alone, has a limitation in controlling the cooling capability over a wide range. Therefore in this temperature control device 1a, the bypass line 4, for supplying a part of the coolant gas which is not cooled into the heat exchanger 8, is attached.

If the electromagnetic switching valve 41 is opened, the high temperature gas from the bypass line 4 is mixed with the low temperature coolant gas, and flows into the heat exchanger 8, so the cooling capability drops. This is a control of the low cooling range, and becomes a control curve indicated by the line UVW in Fig. 5. The change of the inverter frequency is controlled from the minimum value Fₘᵢₙ to the value corresponding to the point W. In this case, the cooling capability is changed from the minimum value Qₘᵢₙ to the value corresponding to the point W.

If the electromagnetic switching value 41 is closed, the high temperature gas does not mix in, so the default cooling capability of the refrigerator 5 is active. This is the control in a normal range, and is the control curve indicated by the line XYZ in Fig. 5. The change of the inverter frequency is controlled from the minimum value Fₘᵢₙ to the maximum value Fₘₐₓ. In this case, the cooling capability changes from the value corresponding to the point X to the maximum value Qₘₐₓ. In this way, in the case of control only in the normal range, the control range of the cooling capability is from the value corresponding to the point X to the maximum value Qₘₐₓ, but by adding the control of the low cooling range, the control range of the cooling capability is expanded. In particular, the lower limit of the cooling capability extends down to the minimum value Qₘᵢₙ.

In the case of low heat load, such as when the rotation speed of the main spindle of the machine tool is low, the temperature control starts from the point U. If the calorific value gradually increases, the temperature control moves on the line UVW from the point U to the point W. If the temperature of the spindle head continuously increases, even after reaching the point W, the control curve shifts from the line UVW in the low cooling range to the line XYZ in the normal range. In other words, the electromagnetic switching valve 41 is closed, and the inverter frequency is dropped to the value corresponding to the point Y. If the calorific value continuously increases thereafter, the temperature control moves on the line XYZ from the point Y to the point Z.

If the calorific value decreases from the point Z, the temperature control moves on the line XYZ from the point Z to the point X. If the temperature of the spindle head continuously decreases even after reaching the point X, the control curve shifts from the line XYZ in the normal range to the line UVW in the low cooling range. In other words, the electromagnetic switching valve 41 is opened, and the inverter frequency is increased to a value corresponding to the point V. If the calorific value continuously decreases after this, the temperature control moves on the line UVW from the point V to the point U.

Fig. 6 is a graph depicting a response at the change of the calorific value according to the temperature control method by the temperature control device 1a in Fig. 4. The abscissa indicates an elapsed time [minutes], and the ordinate indicates a temperature [°C] of the cooling oil. The upper side curve indicates the temperature of the cooling oil returned after cooling the spindle head (return oil temperature), and is a temperature detected by the temperature sensor 21. The lower side curve indicates the temperature of the cooling oil which is cooled by the heat exchanger 8, and is supplied to the spindle head (supply oil temperature). The setting temperature of the return oil in the feedback control is 25°C.

In Fig. 6, the main spindle is driven at a 200W driving power from time 0 to 5 minutes, and is driven at a 1500W driving power after 5 minutes has elapsed. In this case, in the control curve in Fig. 5, the control state moves on the line UVW up to the point W, and then moves from the point W to the point Y, but in order to stably perform movement in this discontinuous control state, a predetermined standby time is provided by a timer before moving to the point Y. Without this standby time, discontinuous control state movement (switching of the electromagnetic switching value 41) occurs frequently, and control becomes unstable. In Fig. 6, the point M to the point N in the supply oil temperature graph is the standby time based on the timer, during which the supply oil temperature rises slightly. At the point N, the electromagnetic switching value 41 is closed, and control in the normal range is started.

As described above, if temperature control only of feedback control is performed by the temperature control device 1a, the time until the return oil temperature stabilizes (settling time) becomes relatively long when the calorific value of the spindle head changes. In Fig. 6, the settling time Tₛ is about 10 minutes. The transient deviation (D in Fig. 6) between the setting temperature and the return oil temperature also increases. In Fig. 6, the transient deviation D is 2.2°C.

### DISCLOSURE OF THE INVENTION

According to the conventional temperature control, control accuracy is insufficient to keep the processing accuracy of a machine tool high, and even the technology of Patent Document JP 2529905 B2, whereby the accuracy of the temperature control has been improved, has problems, that is the development of a system takes time, and the cost of the entire system increases.

Even if temperature control is performed only by feedback control using the temperature control device 1a in Fig. 4, a problem is that the settling time Tₛ becomes long, and the transient deviation D increases when the calorific value of the spindle head changes.

With the foregoing in view, it is an object of the present invention to provide a temperature control method and device for a machine tool which can decrease a transient deviation between the setting temperature and the coolant temperature, and can decrease the time until the coolant temperature stabilizes (settling time), even if the calorific value of a heating source of the machine tool changes.

To achieve the above objects, a temperature control method for machine tools according to the present invention is a temperature control method for a machine tool according to appended claim 1.

In the above mentioned temperature control method for machine tools, it is preferable that the temperature control means performs control according to the first control procedure in an area where the calorific value of the spindle head is small, and performs the control according to the second control procedure in an area where the calorific value of the spindle head is large, and switches the first control procedure and the second control procedure continuously.

In the above mentioned temperature control method for machine tools, the opening degree of the bypass flow rate adjustment valve in the first control procedure is controlled by PID control.

In the above mentioned temperature control method for machine tools, the rotation speed of the refrigerator in the second control procedure is controlled by PID control, and the expansion valve in the second control procedure controls the opening degree to a degree which corresponds to the rotation speed of the refrigerator on a one-to-one basis.

In the above mentioned temperature control method for machine tools, it is preferable that the opening degree of the expansion valve and the bypass flow rate adjustment valve can be controlled by digital values.

In the above mentioned temperature control method for machine tools, it is preferable that the refrigerator changes the rotation speed by the driving frequency of the inverter.

A temperature control device for machine tools of the present invention, comprises the features defined in claim 5.

In the above mentioned temperature control device for machine tools, the temperature control means performs control according to the first control procedure in an area where the calorific value of the spindle head is small, and performs control according to the second control procedure in an area where the calorific value of the spindle head is large, and switches the first control procedure and the second control procedure continuously.

In the above mentioned temperature control device for machine tools, the opening degree of the bypass flow rate adjustment valve in the first control procedure is controlled by PID control.

In the above mentioned temperature control device for machine tools, the rotation speed of the refrigerator in the second control procedure is controlled by PID control, and the expansion valve in the second control procedure controls the opening degree to a degree which corresponds to the rotation speed of the refrigerator on a one-to-one basis.

In the above mentioned temperature control device for machine tools, it is preferable that the opening degree of the expansion valve and the bypass flow rate adjustment valve can be controlled by digital values.

In the above mentioned temperature control device for machine tools, it is preferable that the refrigerator changes the rotation speed by the driving frequency of the inverter.

Since the present invention has the above mentioned configuration, the following effects are exhibited.

Because the temperature control is performed only by feedback control, the interface circuit, software and control table for feed forward control are not required, therefore time and cost for system development can be dramatically decreased. Hence the cost of a temperature control device can also be decreased. Even if the temperature control is performed only by feedback control, the control accuracy and the response characteristics in the shift between modes can be improved.

The temperature control means continuously switches between the first control procedure and the second control procedure, so the modes of the first control procedure and the second control procedure can also be quickly and smoothly shifted. As a result, the accuracy of the temperature control and the response characteristics improve.

Since the opening degree of the bypass flow rate adjustment valve is controlled by PID control, high accuracy, high-speed response and high stability control are possible.

Since the rotation speed of the refrigerator is controlled by PID control, high accuracy, high-speed response and high stability control are possible. The opening degree of the expansion valve is controlled to be a value which corresponds to the rotation speed of the refrigerator on a one-to-one basis, so the control mechanism is simplified and high-speed response becomes possible.

Since the opening degree of the expansion valve and the bypass flow rate adjustment valve can be controlled by digital values, high accuracy opening degree control becomes possible.

Since the rotation speed of the refrigerator is changed by the driving frequency of the inverter, the change of the cooling capability can be smoothly controlled, and unnecessary energy consumption can also be decreased.

### BRIEF DESCRIPTION OF THE DRAWINGS

Fig. 1 is a diagram depicting a configuration of a temperature control device 1 of the present invention;
Fig. 2 is a graph depicting a control state of a temperature control method of the present invention;
Fig. 3 is a graph depicting a response when a calorific value is changed according to the temperature control method of the present invention;
Fig. 4 is a diagram depicting a configuration of a conventional control device 1a;
Fig. 5 is a graph depicting a control state of a temperature control section 10a; and
Fig. 6 is a graph depicting a response when the calorific value is changed according to a temperature control method by the temperature control device 1a in Fig. 4.

### EXPLANATION OF REFERENCE NUMERALS

- 1: temperature control device
- 2: cooling circuit
- 3: circulation circuit
- 4: bypass line
- 5: refrigerator
- 6: condenser
- 7: expansion valve
- 8: heat exchanger
- 9: bypass flow rate adjustment valve
- 10: temperature control section
- 11: display section
- 12: input section
- 13: reference temperature sensor
- 21: temperature sensor
- 22: cooling pump
- 23: driving motor
- 41: electromagnetic switching valve
- 61: cooling fan

### BEST MODE FOR CARRYING OUT THE INVENTION

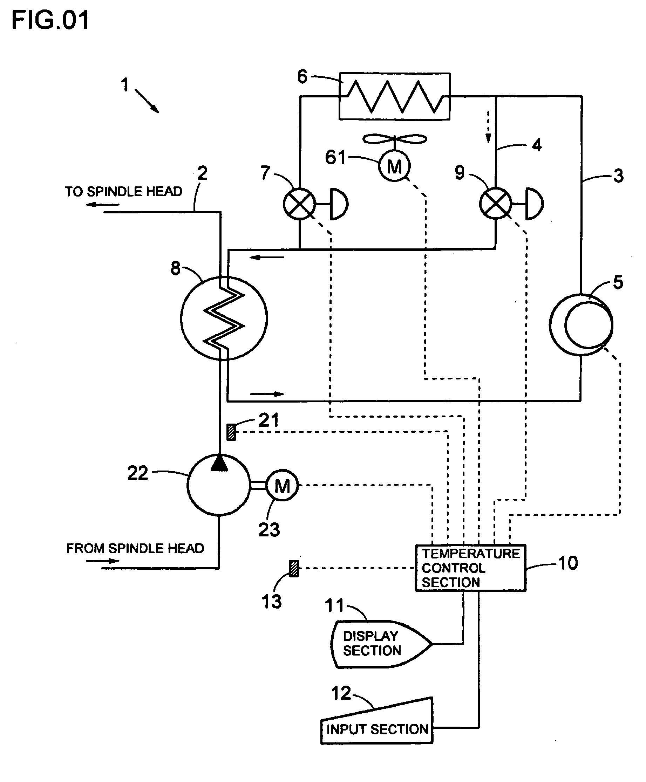

Embodiments of the present invention will now be described with reference to the drawings. Fig. 1 is a diagram depicting a configuration of a temperature control device 1 of the present invention. In this description, a spindle head is used as an example of a typical heating source of a machine tool. A main spindle is rotatably supported to the spindle head, and a tool or work piece is mounted to the main spindle and is rotary driven. Since the rotation speed of the main spindle of the machine tool changes from stopping state to several thousand rotations per minute, temperature control is performed by cooling the spindle head which supports the main spindle, so that the temperature of the spindle head always maintains a predetermined temperature difference with respect to a reference temperature. In other words, the control target is always maintaining the temperature of the spindle head to have a predetermined temperature difference with respect to the reference temperature.

The reference temperature is set to a room temperature or a temperature of an element (e.g. bed, column) having a large time constant (having a large thermal capacity) out of the composing elements of the machine tool, as mentioned above. The temperature of the reference element, which is measured by a reference temperature sensor 13, is set as the reference temperature. For the reference temperature, one temperature may be selected out of the temperatures measured at a plurality of locations, or an average value of a plurality of measured values may be used. The reference temperature may also be set by performing an appropriate computation on the measured values.

In Fig. 1, a cooling circuit 2 is created so as to cool the spindle head of the machine tool, and a cooling oil, as a coolant, circulates in the cooling circuit 2. A cooling pump 22 installed in the cooling circuit 2 is driven by a driving motor 23, and circulates the cooling oil in the cooling circuit 2 at a predetermined flow rate. After being cooled by a heat exchanger 8, the cooling oil is supplied to the spindle head, and cools the spindle head. The cooling oil, after cooling the spindle head, circulates through the cooling circuit 2 and returns to the cooling pump 22. A temperature of the cooling oil after cooling the spindle head (return oil temperature) is detected by a temperature sensor 21, and feedback control is performed so that the return oil temperature becomes a setting temperature. The setting temperature is set to a value which has a predetermined temperature difference from the reference temperature. The temperature difference may be 0, and in this case, the setting temperature is the same as the reference temperature. The position of the temperature sensor 21 is not limited to the position shown in Fig. 1, but may be any position as long as the return oil temperature can be detected. For example, [the temperature sensor 21] may be disposed at the in flow side of the cooling pump 22.

For the coolant which flows into the heat exchanger 8, on the other hand, the coolant gas is first compressed by a refrigerator 5 and is then sent to a condenser 6. In the condenser 6, the heat of the coolant gas, of which temperature was increased by compression, is radiated and the gas is liquefied. The condenser 6 is cooled by air cooling using a cooling fan 61. The liquefied coolant gas is throttle-expanded while passing through an expansion valve 7, and becomes a low temperature low pressure gas-liquid mixed state. This low temperature low pressure gas-liquid mixed coolant gas flows into the heat exchanger 8, and cools the cooling oil. The coolant gas is evaporated in the heat exchanger 8 by receiving the heat of the cooling oil, and efficiently cools the cooling oil by the heat of vaporization. The coolant gas flowing from the heat exchanger 8 returns to the refrigerator 5, and circulates through a circulation circuit 3.

The refrigerator 5 is driven by an inverter, and the rotation speed of the refrigerator 5 can be changed by changing the driving frequency. Because of this, the cooling capability of the temperature control device 1 can be changed and controlled. The driving frequency of the refrigerator 5 is controlled by a temperature control section 10. Specific details of the control of the temperature control section 10 will be described later.

In the circulation circuit 3 through which the coolant gas circulates, a bypass line 4 is attached, and this bypass line 4 supplies a part of the coolant gas, of which temperature was increased by compression, into the heat exchanger 8 without cooling. In the bypass line 4, a bypass flow rate adjustment valve 9 is installed. The bypass line 4 is disposed in order to adjust a decrease in the cooling capability for cooling the cooling oil. When the bypass flow rate adjustment valve 9 is in open state, the high temperature gas mixes into the low temperature coolant gas, and flows into the heat exchanger 8, so the cooling capability drops. By controlling the change in the opening degree of the bypass flow rate adjustment valve 9, the change in the cooling capability can be controlled (low cooling mode). When the bypass flow rate adjustment valve 9 is in full closed state, the high temperature gas does not mix in, and the default cooling capability (normal cooling mode) of the refrigerator 5 is active.

The temperature control section 10 controls the driving frequency of the refrigerator 5, the opening degree of the expansion valve 7, and the opening degree of the bypass flow rate adjustment valve 9 to control the temperature of the spindle head of the machine tool. A display section 11 and an input section 12 are connected to the temperature control section 10. Various parameters on temperature control can be confirmed by the display section 11, and these parameters can be input by the input section 12. For the temperature of the spindle head, the temperature of the cooling oil, which cooled the spindle head and returned (return oil temperature), is detected by the temperature sensor 21, and this detected value is regarded as the typical temperature value of the spindle head. Feedback control is performed so that this return oil temperature becomes the setting temperature.

The feedback control is performed at high precision, high-speed response and high stability by PID control. In the low cooling mode, the change of the opening degree of the bypass flow rate adjustment valve 9 is controlled by PID control, and in the normal cooling mode, a change in the inverter frequency to drive the refrigerator 5 is controlled by PID control for feedback control. The opening degree of the expansion valve 7 is fixed to a predetermined value corresponding to the inverter frequency to drive the refrigerator 5 in low cooling mode, or is changed interlocking with the inverter frequency for the refrigerator 5 in normal cooling mode.

The opening degree y of the expansion valve 7 is controlled so as to correspond with the inverter frequency x for driving the refrigerator 5 on a one-to-one basis. For example, the opening degree y is controlled according to the linear relational expression y = ax + b. Here a and b are constants. Constants a and b are set to appropriate values according to the capacity and characteristics of the refrigerator 5.

The expansion valve 7 and the bypass flow rate adjustment valve 9 move the value element by stepping motor driving, so as to adjust the opening degree of the value. Therefore the opening degree of the valve can be adjusted by a digital opening degree instruction respectively.

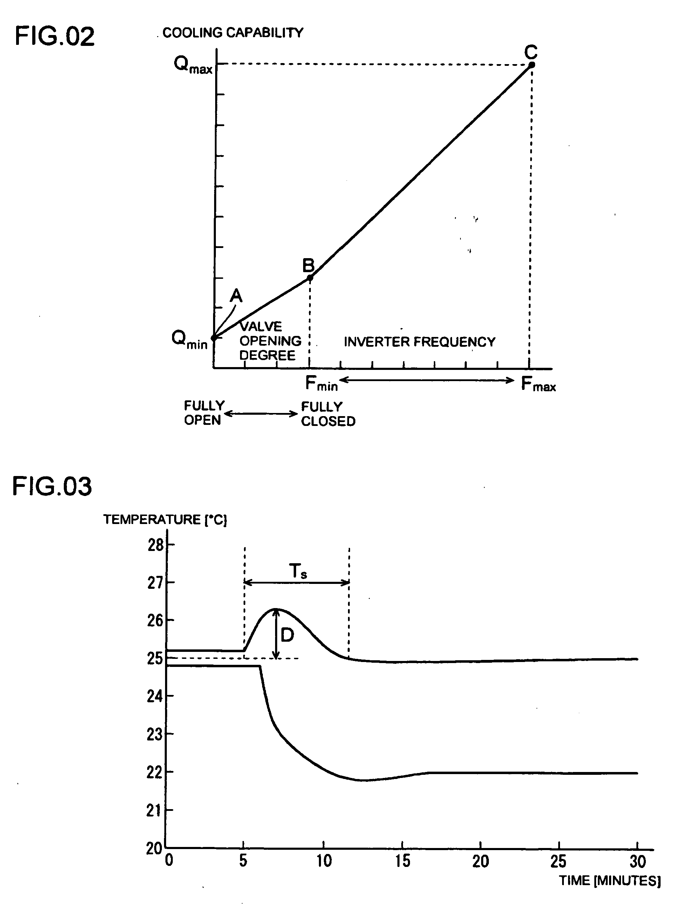

Fig. 2 is a graph depicting a control state of the temperature control method by the temperature control device 1 of the present invention. The abscissa of the graph in Fig. 2 indicates the inverter frequency for driving the refrigerator 5, and the ordinate indicates the cooling capability of the temperature control device 1.
The left portion from the minimum value Fₘᵢₙ in the abscissa of the graph in Fig. 2 indicates the opening degree of the bypass flow rate adjustment valve 9. Since the rotation speed of the main spindle of the machine tool changes in a wide range, the change of the calorific value is also great, and the temperature control section 10 must perform a smooth control throughout the wide range, from low cooling capability to high cooling capability. However, as mentioned above, controlling the cooling capability through a wide range has limitations if only the driving frequency of an inverter for driving the refrigerator 5 is used. Therefore in this temperature control device 1, the bypass line 4, for supplying a part of the coolant gas which is not cooled into the heat exchanger 8, is attached.

If the bypass flow rate adjustment valve 9 is opened, the high temperature gas from the bypass line 4 mixes with the low temperature coolant gas and flows into the heat exchanger 8, so the cooling capability drops. By controlling the change of the opening degree of the bypass flow rate adjustment valve 9, the change of the cooling capability can be controlled. This is the control in the low cooling mode, which is indicated by the control curve shown by line AB in Fig. 2. In this low cooling mode, the inverter frequency for driving the refrigerator 5 is maintained at the minimum value Fₘᵢₙ. At this time, the cooling capability changes from the minimum value Qₘᵢₙ to the value corresponding to the point B.

If the bypass flow rate adjustment valve 9 is closed, the high temperature gas does not mix in, so the default cooling capability of the refrigerator 5 is active. By controlling the change of the inverter frequency, the change of the cooling capability can be controlled. This is the control in the normal cooling mode, which is indicated by the control curve shown by line BC in Fig. 2. The change of the inverter frequency is controlled from the minimum value Fₘᵢₙ to the maximum value Fₘₐₓ. In this case, the cooling capability changes from a point corresponding to the point B to the maximum value Qₘₐₓ. In this way, the control range of the cooling capability is in the range from the value corresponding to the point B to the maximum value Qₘₐₓ if only control in the normal cooling mode is used, but the controlling range of the cooling capability is expanded by adding control in the low cooling mode. In particular, the lower limit of the cooling capability extends down to the minimum value Qₘᵢₙ.

The control curve of the low cooling mode and the control curve of the normal cooling mode are continuous at the point B, as shown in Fig. 2, so the transition between these modes can be smooth. In other words, it is unnecessary to set a predetermined standby time when a range is shifted to another range, as shown in the control in Fig. 5. In this way, according to the temperature control device 1 of the present invention, modes can be shifted quickly. The control in the low cooling mode (line AB) corresponds to the first control procedure in the Claims, and the control in the normal cooling mode (line BC) corresponds to the second control procedure in the Claims.

In the case of low thermal load, such as the case when the rotation speed of the main spindle of the machine tool is low, the temperature control starts from the point A. At the point A, the bypass flow rate adjustment valve 9 is fully open, and the inverter frequency is at the minimum value Fₘᵢₙ. If the calorific value gradually increases, the bypass flow rate adjustment valve 9 is gradually closed, and the temperature control moves on the line AB from point A to point B. At the point B, the bypass flow rate adjustment valve 9 becomes fully closed (inverter frequency is at minimum value Fₘᵢₙ). If the temperature of the spindle head continuously increases even after reaching the point B, the control curve shifts from the line AB in the low cooling mode to the line BC in the normal cooling mode. In other words, the bypass flow rate adjustment valve 9 is maintained in a fully closed state, and the change of the inverter frequency is controlled from the minimum value Fₘᵢₙ to the maximum value Fₘₐₓ. If the calorific value increases, the temperature control moves on the line BC from the point B to the point C.

If the calorific value decreases from the point C, the temperature control moves on the lien BC from the point C to the point B. If the temperature of the spindle head continuously decreases even after reaching the point B, the control curve shifts from the line BC in the normal cooling mode to the line AB in the low cooling mode. In other words, the inverter frequency is maintained at the minimum value Fₘᵢₙ, and the change of the opening degree of the bypass flow rate adjustment valve 9 is controlled. If the calorific value continuously decreases after this, the temperature control moves on the line AB from the point B to the point A.

Fig. 3 is a graph depicting the response at the change of the calorific value according to the temperature control method by the temperature control device 1 of the present invention. The abscissa indicates the elapsed time [minutes] and the ordinate indicates the temperature [°C] of the cooling oil. The upper side curve indicates the return oil temperature detected by the temperature sensor 21. The lower side curve indicates the temperature of the cooling oil, which is cooled by the heat exchanger 8 and is supplied to the spindle head (supply oil temperature). This setting temperature of the return oil in the feedback control is 25°C.

In Fig. 3, the main spindle is driven at 200W driving power from time 0 to 5 minutes, and is driven at 1500W driving power after 5 minutes has elapsed. In this case, in the control curve in Fig. 2, the control state moves on the line AB up to the point B, and then shifts to the line BC. The shift from the line AB in the low cooling mode to the line BC in the normal cooling mode can be quick and smooth. The standby time, due to the shift between modes, is unnecessary, so the response when the calorific value changes improves.

In Fig. 3, the settling time Tₛ (time until the return oil temperature stabilizes), when the calorific value of the spindle head changed, is 6 minutes, which is shorter than the case of Fig. 6. The transient deviation D (transient deviation between the setting temperature and return oil temperature) is 1.3°C, which is smaller than the transient deviation in Fig. 6.

As described above, according to the present invention, response characteristics, when modes are shifted, can be improved even if temperature is controlled only by feedback control. Since the temperature is controlled only by feedback control, the interface circuit, software and control table required for feed forward control are unnecessary, and time and cost of system development can be dramatically decreased. By this, the cost of the temperature control device can also be decreased.

In the above embodiment, the cooling oil is used as an example of the coolant for cooling the spindle head of machine tools, but a cooling other than cooling oil may be used. The case of cooling the spindle head of machine tools was described, but [the present invention] can also be applied to the case of cooling other heating elements.

### INDUSTRIAL APPLICABILITY

According to the present invention, a temperature control method and device for a machine tool, where the response characteristic when the calorific value of the heating source of the machine tool changed is improved, can be provided, and the cost of the temperature control device can also be decreased.

## Claims

1. A temperature control method for a machine tool, which has:
a spindle head which has a rotatable main spindle and generates heat when said main spindle is rotary-driven;
a cooling circuit (2) for circulating a coolant for cooling said spindle head:
a refrigerator (5) for compressing a coolant gas;
a condenser (6) for liquefying said coolant gas compressed by said refrigerator (5) by radiating heat;
an expansion valve (7) for throttle-expanding said liquefied coolant gas:
a heat exchanger (8) for cooling said coolant by said coolant gas which is throttle-expanded and is in a low pressure and low temperature gas-liquid mixed state;
a bypass line (4) for supplying said coolant gas immediately after being output from said refrigerator (5) to said heat exchanger (8) bypassing said condenser (6):
a bypass flow rate adjustment valve (9) formed in the middle of said bypass line (4);
reference temperature setting means (10, 13) for setting a reference temperature;
a temperature sensor (21) for detecting a return liquid temperature, which is a temperature of said coolant after cooling said spindle head; and
temperature control means (10) which adjusts the flow rate of said coolant gas to said heat exchanger (8) by controlling the rotation speed of said refrigerator (5) and the opening degree of said expansion valve (7), and adjusts the flow rate of said coolant gas passing through said bypass line (4) by controlling said bypass flow rate adjustment valve (9), **characterised in that** the temperature control method comprises:
a first control procedure for said temperature control means (10) to set the rotation speed of said refrigerator (5) to a predetermined lower limit value and to set the opening degree of said expansion valve (7) to a predetermined value corresponding to the rotation speed of said refrigerator (5), and to perform feedback control on the opening degree of said bypass flow rate adjustment valve (9) so that a temperature difference between said return liquid temperature detected by said temperature sensor (21) and said reference temperature becomes constant; and
a second control procedure for said temperature control means (10) to fully close said bypass flow rate adjustment valve (9) and to perform feedback control on the rotation speed of said refrigerator (5) by PID control so that the temperature difference between said return liquid temperature detected by said temperature sensor (21) and said reference temperature becomes constant, and to perform control on the opening degree of said expansion valve (7) as a linear fuction of the rotation speed of said refrigerator (5) on a one-to-one basis.

2. The temperature control method for a machine tool according to Claim 1. **characterized in that** said temperature control means (10) performs the control according to said first control procedure in an area where the calorific value of said spindle head is small, and performs the control according to said second control procedure in an area where the calorific value of said spindle head is large, and switches said first control procedure and said second control procedure continuously.

3. The temperature control method for a machine tool according to Claim 2, **characterized in that** the opening degree of said expansion valve (7) and said bypass flow rate adjustment valve (9) can be controlled by digital values.

4. The temperature control method for a machine tool according to one of Claim 2 or Claim 3, **characterized in that** said refrigerator (5) changes the rotation speed by the driving frequency of the inverter.

5. A temperature control device for a machine tool,
comprising:
a spindle head which has a rotatable main spindle and generates heat when said main spindle is rotary-driven
a coolant circuit (2) for circulating a coolant for cooling a spindle head of a machine tool:
a refrigerator (5) for compressing a coolant gas;
a condenser (6) for liquefying said coolant gas compressed by said refrigerator (5) by radiating heat:
an expansion valve (7) for throttle-expanding said liquefied coolant gas;
a heat exchanger (8) for cooling said coolant by said coolant gas which is throttle-expanded and is in a low pressure and low temperature gas-liquid mixed state:
a bypass line (4) for supplying said coolant gas immediately after being output from said refrigerator (5) to said heat exchanger (8) bypassing said condenser (6):
a bypass flow rate adjustment valve (9) formed in the middle of said bypass line (4):
reference temperature setting means (10,13) for setting a reference temperature:
a temperature sensor (21) for detecting a return liquid temperature, which is a temperature of said coolant after cooling said spindle head: and
temperature control means (10) which is able to adjust the flow rate of said coolant gas to said heat exchanger (8) by controlling the rotation speed of said refrigerator (5) and the opening degree of said expansion valve (7), and is able to adjust the flow rate of said coolant gas passing through said bypass line (4) by controlling said bypass flow rate adjustment valve (9), **characterised in that**
said temperature control means (10) is able to execute:
a first control procedure for setting the rotation speed of said refrigerator (5) to a predetermined lower limit value, and setting the opening degree of said expansion valve (7) to a predetermined value corresponding to the rotation speed of said refrigerator (5), and performing feedback control on the opening degree of said bypass flow rate adjustment valve (9) by PID control so that a temperature difference between said return liquid temperature detected by said temperature sensor (21) and said reference temperature becomes constant: and
a second control procedure for fully closing said bypass flow rate adjustment valve (9) and performing feedback control on the rotation speed of said refrigerator (5) by PID control so that the temperature difference between said return liquid temperature detected by said temperature sensor (21) and said reference temperature becomes constant, and performing control on the opening degree of said expansion valve (7) as a linear function of the rotation speed of said refrigerator (5)
wherein said temperature control means (10) on a one-to-one basis perform the control according to said first control procedure in an area where the calorific value of said spindle head is small, and is able to perform the control according to said second control procedure in an area where the calorific value of said spindle head is large, and is able to switch said first control procedure continuously.

6. The temperature control device for a machine tool according to claim 5, **characterized in that** the opening degree of said expansion valve (7) and said bypass flow rate adjustment valve (9) can be controlled by digital values.

7. The temperature control device for a machine tool according to one of Claim 5 or Claim 6. **characterized in that** said refrigerator (5) changes the rotation speed by the driving frequency of the inverter.

## Patentansprüche

1. Temperatursteuerverfahren für ein Bearbeitungswerkzeug, welches umfasst:
einen Spindelkopf mit einer drehbaren Hauptspindel, der Wärme erzeugt, wenn die Hauptspindel zur Drehung angetrieben wird;
einem Kühlkreislauf (2) zur Zirkulation von Kühlmittel zum Kühlen des Spindelkopfes;
ein Kühlaggregat (5) zur Kompression eines Kühlgases;
einen Kondensator (6) zur Verflüssigung des Kühlgases, das durch das Kühlaggregat (5) komprimiert worden ist, mittels Wärmestrahlung;
ein Entspannungsventil (7) zur Düsenentspannung des verflüssigten Kühlgases;
einen Wärmetauscher (8) zum Kühlen des Kühlmittels durch das Kühlgas, das düsenentspannt worden ist und sich in einem gemischten Gas-Flüssig-Zustand bei niedrigem Druck und niedriger Temperatur befindet;
eine Umgehungsleitung (4) zur Zuleitung des Kühlgases unmittelbar nach dem Auslass aus dem Kühlaggregat (5) zum Wärmetauscher (8) unter Umgehung des Kondensators (6);
ein Umgehungsströmungs-Einstellventil (9) in der Mitte der Umgehungsleitung (4);
Referenztemperatur-Einstellmittel (10,13) zur Festlegung einer Referenztemperatur;
einen Temperatursensor (21) zur Messung einer Flüssigkeitsrückkehrtemperatur, welches eine Temperatur des Kühlmittels nach Kühlen des Spindelkopfes ist; und
Temperatursteuermittel (10), welche den Strömungsdurchsatz des Kühlgases zum Wärmetauscher (8) durch Steuerung der Rotationsgeschwindigkeit des Kühlaggregats (5) und des Öffnungsgrades des Entspannungsventils (7) einstellen, und den Strömungsdurchsatz des Kühlgases durch die Umgehungsleitung (4) durch Steuerung des Umgehungsströmungseinstellventils (9) steuern, **dadurch gekennzeichnet, dass** das Temperatursteuerverfahren umfasst:
eine erste Steuerprozedur, in der die Temperatursteuermittel (10) die Rotationsgeschwindigkeit des Kühlaggregats (5) auf einen vorbestimmten unteren Grenzwert einstellen und den Öffnungsgrad des Entspannungsventils (7) auf einen vorbestimmten Wert entsprechend der Rotationsgeschwindigkeit des Kühlaggregats (5) einstellen, und in der eine Rückkopplungssteuerung des Öffnungsgrads des Umgehungsströmungseinstellventils (9) durchgeführt wird, derart, dass eine Temperaturdifferenz zwischen der Rückflussflüssigkeitstemperatur, die durch den Temperatursensor (21) gemessen wird, und der Referenztemperatur konstant wird; und
eine zweite Steuerprozedur, in der die Temperatursteuermittel (10) vollständig das Umgehungsströmungseinstellventil (9) schließen und eine Rückkopplungssteuerung der Rotationsgeschwindigkeit des Kühlaggregats (5) durch PID-Regelung durchgeführt wird, derart, dass die Temperaturdifferenz zwischen der Rückkehrflüssigkeitstemperatur, die durch den Temperatursensor (21) gemessen wird, und der Referenztemperatur konstant wird, und eine Steuerung des Öffnungsgrads des Entspannungsventils (7) als eine lineare Funktion der Rotationsgeschwindigkeit des Kühlaggregats (5) auf einer Eins-zu-Eins-Basis durchgeführt wird.

2. Temperatursteuerverfahren für ein Bearbeitungswerkzeug gemäß Anspruch 1, **dadurch gekennzeichnet, dass** die Temperatursteuermittel (10) die Steuerung entsprechend der ersten Steuerprozedur in einem Bereich vornehmen, in welchem der Wärmewert des Spindelkopfes klein ist, und die Steuerung entsprechend der zweiten Steuerprozedur in einem Bereich vornehmen, in welchem der Wärmewert des Spindelkopfs groß ist, und kontinuierlich zwischen der ersten Steuerprozedur und der zweiten Steuerprozedur hin und her schalten.

3. Temperatursteuerverfahren für ein Bearbeitungswerkzeug gemäß Anspruch 2, **dadurch gekennzeichnet, dass** der Öffnungsgrad des Entspannungsventils (7) und des Umgehungsströmungseinstellventils (9) mittels digitaler Werte gesteuert werden können.

4. Temperatursteuerverfahren für ein Bearbeitungswerkzeug gemäß Anspruch 2 oder Anspruch 3, **dadurch gekennzeichnet, dass** das Kühlaggregat (5) die Rotationsgeschwindigkeit durch die Antriebsfrequenz des Inverters ändert.

5. Temperatursteuerungsvorrichtung für ein Bearbeitungswerkzeug, umfassend:
einen Spindelkopf mit einer drehbaren Hauptspindel, der Wärme erzeugt, wenn die Hauptspindel zur Drehung angetrieben wird;
einen Kühlmittelkreislauf (2) zur Zirkulation von Kühlmittel zur Kühlung des Spindelkopfes des Bearbeitungswerkzeugs;
ein Kühlaggregat (5) zur Kompression eines Kühlgases;
einen Kondensator (6) zur Verflüssigung des Kühlgases, das durch das Kühlaggregat (5) komprimiert worden ist, mittels Wärmestrahlung;
ein Entspannungsventil (7) zur Düsenentspannung des verflüssigten Kühlgases;
einen Wärmetauscher (8) zum Kühlen des Kühlmittels durch das Kühlgas, das gasentspannt worden ist und sich in einem gemischten Gas-Flüssigzustand bei niedrigem Druck und niedriger Temperatur befindet;
eine Umgehungsleitung (4) zur Zuleitung des Kühlgases unmittelbar nach dem Auslass aus dem Kühlaggregat (5) zum Wärmetauscher (8) unter Umgehung des Kondensators (6);
ein Umgehungsströmungseinstellventil (9) in der Mitte der Umgehungsleitung (4);
Referenztemperatur-Einstellmittel (10,13) zur Festlegung einer Referenztemperatur;
einen Temperatursensor (21) zur Messung einer Rückkehrflüssigkeitstemperatur, welche eine Temperatur des Kühlmittels nach dem Kühlen des Spindelkopfes ist; und
Temperatursteuermittel (10), die in der Lage sind, den Strömungsdurchsatz des Kühlgases zum Wärmetauscher (8) durch Steuerung der Rotationsgeschwindigkeit des Kühlaggregats (5) und dem Öffnungsgrad des Entspannungsventils (7) zu steuern, und dazu in der Lage sind, den Strömungsdurchsatz des Kühlgases nach dem Passieren der Umgehungsleitung (4) durch Steuerung des Umgehungsströmungseinstellventils (9) zu steuern, **dadurch gekennzeichnet, dass** die Temperatursteuermittel (10) dazu in der Lage sind,
eine erste Steuerprozedur durchzuführen, zur Festlegung der Rotationsgeschwindigkeit des Kühlaggregats (5) auf einen vorbestimmten unteren Grenzwert, und zur Festlegung des Öffnungsgrads des Entspannungsventils (7) auf einen vorbestimmten Wert entsprechend der Rotationsgeschwindigkeit des Kühlaggregats (5), und zur Durchführung einer Regelung des Öffnungsgrads des Umgehungsströmungseinstellventils (9) durch PID-Steuerung, derart, dass eine Temperaturdifferenz zwischen einer Rückkehrflüssigkeitstemperatur, die durch den Temperatursensor (21) gemessen wird, und der Referenztemperatur konstant wird;
und eine zweite Steuerprozedur durchzuführen, zum vollständigen Schließen des Umgehungsströmungseinstellventils (9) und zur Durchführung einer Regelung der Rotationsgeschwindigkeit des Kühlaggregats (5) durch PID-Steuerung, derart, dass die Temperaturdifferenz zwischen der Rückkehrflüssigkeitstemperatur, die durch den Temperatursensor (21) gemessen wird, und der Referenztemperatur konstant wird, und zur Durchführung einer Steuerung des Öffnungsgrads des Entspannungsventils (7) als lineare Funktion der Rotationsgeschwindigkeit des Kühlaggregats (5) auf einer Eins-zu-Eins-Basis,
wobei die Temperatursteuermittel (10) dazu in der Lage sind, die Steuerung entsprechend der ersten Steuerprozedur in einem Bereich durchzuführen, in welchem der Wärmewert des Spindelkopfes klein ist und die Steuerung entsprechend der zweiten Steuerprozedur in einem Bereich vorzunehmen, in welchem der Wärmewert des Spindelkopfes groß ist, und die erste Steuerprozedur kontinuierlich umzuschalten.

6. Temperatursteuervorrichtung für ein Bearbeitungswerkzeug gemäß Anspruch 5, **dadurch gekennzeichnet, dass** der Öffnungsgrad des Entspannungsventils (7) und des Umgehungsströmungseinstellventils (9) durch digitale Werte gesteuert werden können.

7. Temperatursteuervorrichtung für ein Bearbeitungswerkzeug gemäß Anspruch 5 oder Anspruch 6, **dadurch gekennzeichnet, dass** das Kühlaggregat (5) die Rotationsgeschwindigkeit durch die Antriebsfrequenz des Inverters ändert.

## Revendications

1. Procédé de régulation de température pour une machine-outil, laquelle a :
une tête de broche qui a une broche principale rotative et génère de la chaleur lorsque ladite broche principale est entraînée en rotation,
un circuit de refroidissement (2) pour faire circuler un caloporteur afin de refroidir ladite tête de broche,
un réfrigérateur (5) pour comprimer un gaz réfrigérant,
un condensateur (6) pour liquéfier ledit gaz réfrigérant comprimé par ledit réfrigérateur (5) en rayonnant de la chaleur,
un détendeur (7) pour dilater par étranglement ledit gaz réfrigérant liquéfié,
un échangeur de chaleur (8) pour refroidir ledit caloporteur par l'intermédiaire dudit gaz réfrigérant qui est dilaté par étranglement et est dans un état mélangé gaz-liquide à basse température et basse pression,
une conduite de dérivation (4) pour délivrer ledit gaz réfrigérant immédiatement après qu'il ait été délivré en sortie par ledit réfrigérateur (5) audit échangeur de chaleur (8) en contournant ledit condensateur (6),
une vanne de réglage de débit de dérivation (9) formé au milieu de ladite conduite de dérivation (4),
des moyens de réglage de température de référence (10, 13) pour régler une température de référence,
une sonde de température (21) pour détecter une température de liquide en retour, laquelle est une température dudit caloporteur après le refroidissement de ladite tête de broche, et
des moyens de régulation de température (10) lesquels règlent le débit dudit gaz réfrigérant dans ledit échangeur de chaleur (8) en régulant la vitesse de rotation dudit réfrigérateur (5) et le degré d'ouverture dudit détendeur (7), et règlent le débit dudit gaz réfrigérant traversant ladite conduite de dérivation (4) en régulant ladite vanne de réglage de débit de dérivation (9), **caractérisé en ce que** le procédé de régulation de température comporte :
un premier processus de régulation pour lesdits moyens de régulation de température (10) pour établir la vitesse de rotation dudit réfrigérateur (5) à une valeur limite inférieure et pour établir le degré d'ouverture dudit détendeur (7) à une valeur prédéterminée correspondant à la vitesse de rotation dudit réfrigérateur (5), et pour exécuter une commande de rétroaction sur le degré d'ouverture de ladite vanne de réglage de débit de dérivation (9) de sorte qu'une différence de température entre ladite température de liquide de retour détectée par ladite sonde de température (21) et ladite température de référence devient constante, et
un second processus de régulation pour lesdits moyens de régulation de température (10) pour fermer entièrement ladite vanne de réglage de débit de dérivation (9) et pour exécuter une commande de rétroaction sur la vitesse de rotation dudit réfrigérateur (5) par l'intermédiaire d'une commande PID de sorte que la différence de température entre ladite température de liquide de retour détectée par ladite sonde de température (21) et ladite température de référence devient constante, et pour exécuter une commande sur le degré d'ouverture dudit détendeur (7) en tant que fonction linéaire de la vitesse de rotation dudit réfrigérateur (5) sur une base un à un.

2. Procédé de régulation de température pour une machine-outil selon la revendication 1, **caractérisé en ce que** lesdits moyens de régulation de température (10) exécutent la régulation conformément audit premier processus de régulation dans une zone où la valeur calorifique de ladite tête de broche est faible, et exécutent la régulation conformément audit second processus de régulation dans une zone où la valeur calorifique de ladite tête de broche est grande, et basculent continuellement entre ledit premier processus de régulation et ledit second processus de régulation.

3. Procédé de régulation de température pour une machine-outil selon la revendication 2, **caractérisé en ce que** le degré d'ouverture dudit détendeur (7) et de ladite vanne de réglage de débit de dérivation (9) peut être commandé par l'intermédiaire de valeurs numériques.

4. Procédé de régulation de température pour une machine-outil selon l'une quelconque des revendications 2 ou 3, **caractérisé en ce que** ledit réfrigérateur (5) change la vitesse de rotation par la fréquence d'entraînement de l'onduleur.

5. Dispositif de régulation de température pour une machine-outil, comportant :
une tête de broche qui a une broche principale rotative et génère de la chaleur lorsque ladite broche principale est entraînée en rotation,
un circuit de refroidissement (2) pour faire circuler un caloporteur afin de refroidir ladite tête de broche pour une machine-outil,
un réfrigérateur (5) pour comprimer un gaz réfrigérant,
un condensateur (6) pour liquéfier ledit gaz réfrigérant comprimé par ledit réfrigérateur (5) en rayonnant de la chaleur,
un détendeur (7) pour dilater par étranglement ledit gaz réfrigérant liquéfié,
un échangeur de chaleur (8) pour refroidir ledit caloporteur par l'intermédiaire dudit gaz réfrigérant qui est dilaté par étranglement et est dans un état mélangé gaz-liquide à basse température et basse pression,
une conduite de dérivation (4) pour délivrer ledit gaz réfrigérant immédiatement après qu'il ait été délivré en sortie par ledit réfrigérateur (5) audit échangeur de chaleur (8) en contournant ledit condensateur (6),
une vanne de réglage de débit de dérivation (9) formée au milieu de ladite conduite de dérivation (4),
des moyens de réglage de température de référence (10, 13) pour régler une température de référence,
une sonde de température (21) pour détecter une température de liquide en retour, laquelle est une température dudit caloporteur après le refroidissement de ladite tête de broche, et
des moyens de régulation de température (10) lesquels sont capables de régler le débit dudit gaz réfrigérant dans ledit échangeur de chaleur (8) en régulant la vitesse de rotation dudit réfrigérateur (5) et le degré d'ouverture dudit détendeur (7), et sont capables de régler le débit dudit gaz réfrigérant traversant ladite conduite de dérivation (4) en régulant ladite vanne de réglage de débit de dérivation (9), **caractérisé en ce que** lesdits moyens de régulation de température exécutent :
un premier processus de régulation pour établir la vitesse de rotation dudit réfrigérateur (5) à une valeur limite inférieure et pour établir le degré d'ouverture dudit détendeur (7) à une valeur prédéterminée correspondant à la vitesse de rotation dudit réfrigérateur (5), et pour exécuter une commande de rétroaction sur le degré d'ouverture de ladite vanne de réglage de débit de dérivation (9) par l'intermédiaire d'une commande PID de sorte qu'une différence de température entre ladite température de liquide de retour détectée par ladite sonde de température (21) et ladite température de référence devient constante, et
un second processus de régulation pour fermer entièrement ladite vanne de réglage de débit de dérivation (9) et pour exécuter une commande de rétroaction sur la vitesse de rotation dudit réfrigérateur (5) par l'intermédiaire d'une commande PID de sorte que la différence de température entre ladite température de liquide de retour détectée par ladite sonde de température (21) et ladite température de référence devient constante, et pour exécuter une commande sur le degré d'ouverture dudit détendeur (7) en tant que fonction linéaire de la vitesse de rotation dudit réfrigérateur (5) sur une base un à un,
dans lequel lesdits moyens de régulation de température (10) sont capables d'exécuter la régulation conformément audit premier processus de régulation dans une zone où la valeur calorifique de ladite tête de broche est faible, et sont capables d'exécuter la régulation conformément audit second processus de régulation dans une zone où la valeur calorifique de ladite tête de broche est grande, et sont capables de basculer continuellement vers ledit premier processus de régulation.

6. Dispositif de régulation de température pour une machine-outil selon la revendication 5, **caractérisé en ce que** le degré d'ouverture dudit détendeur (7) et de ladite vanne de réglage de débit de dérivation (9) peut être commandé par l'intermédiaire de valeurs numériques.

7. Dispositif de régulation de température pour une machine-outil selon l'une des revendications 5 ou 6, **caractérisé en ce que** ledit réfrigérateur (5) change la vitesse de rotation par la fréquence d'entraînement de l'onduleur.
